(19) **Europäisches Patentamt**

**European Patent Office**

**Office européen des brevets**

(11) **EP 1 708 440 A1**

(12) **EUROPEAN PATENT APPLICATION**

(43) Date of publication:
**04.10.2006 Bulletin 2006/40**

(51) Int Cl.:
*H04L 12/56* (2006.01)

(21) Application number: **06251766.9**

(22) Date of filing: **30.03.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **31.03.2005 GB 0506560**

(71) Applicant: **THE UNIVERSITY COURT OF THE UNIVERSITY OF EDINBURGH Edinburgh EH8 9YL (GB)**

(72) Inventors:
• **McLaughlin, Stephen Edinburgh EH15 2QS (GB)**
• **Laurenson, David Irvine Peebles, Scottish Boarders EH45 8EG (GB)**
• **Zhou, Yuefeng Hayes UB3 2PJ (GB)**

(74) Representative: **Hanson, William Bennett et al Bromhead Johnson Kingsbourne House 229-231 High Holborn London WC1V 7DP (GB)**

(54) **Method of operating a telecommunications network**

(57) A method of selecting one of a plurality of candidate devices (1-6) forming at least part of a wireless personal area network (WPAN) to be a controller of the WPAN. For each candidate device (1-6), the distances between that candidate device and other devices of the WPAN is assessed. A centrally located one (3) of the candidate devices is selected to be the controller, taking said distances into account. The residual battery energy of the candidate devices may also be taken into account.

Fig. 5b

EP 1 708 440 A1

**Description**

This invention relates to a method of selecting one of a plurality of devices forming a wireless personal area network (WPAN) to be a controller of said WPAN, and to devices arranged to perform steps of the method.

Energy efficiency is an important aspect of the personal distributed environment (PDE) as portable devices are, by their nature, battery operated. It may be that some of the other devices of the PDE are also battery operated, and these too must be connected in an energy aware fashion. The wireless personal area network (WPAN) embodies many of the features of battery operated PDE devices. Indeed it is likely that portable PDE devices carried by a person will form a WPAN. Therefore it is important to investigate the WPAN with regard to energy efficiency.

Compared to other similar wireless networks, such as wireless local area networks (WLANs) and wireless cellular networks, the WPAN is operated within a smaller personal space, whose diameter is less than 10m, and at a higher data rate, which could be more than 20 Mbit/s. A new medium access control (MAC) protocol, IEEE 802.15.3, was issued in September 2003 (LAN MAN Standards Committee of the IEEE Computer Society, "IEEE Std 802.15.3 - 2003, Wireless LAN Medium Access Control (MAC) specifications," IEEE, 2003). IEEE 802.15.3 is suitable for low power consumption and high data rate wireless WPANs. Because of the reasonable power saving, power control management, quality of service (QoS) and security mechanisms in IEEE 802.15.3, it is also the potential MAC protocol for ultra wide band (UWB) communication (Moe Z1. Win and Robert A. Scholtz, "Impulse Radio: How It Works," IEEE Communications Letters, Vol. 2, No. 2, Feb. 1998). In IEEE 802.15.3-based WPANs, the data rate will be high enough to support graphics, video, and other multimedia data types. It could reach 110, 200, or even 480 Mbps, which is designed for the extension of IEEE 1394 or USB connections. After the establishment of the strategic spectrum planning and the appropriate regulation for UWB communication by the Federal Communications Commission (FCC) in 2002, UWB is regarded as a promising technology for the physical layer implementation of short-range communications in WPANs. Moreover, currently, most members of the IEEE 802.15.3 Working Group, who intend to provide a specification for a low cost, low power consumption, and high data rate WPAN, are supporting UWB as the technology of choice for the physical layer specification of IEEE 802.15.3.a.

An important issue for IEEE 802.15.3-based WPANs is that the systems have to operate in the presence of other wireless networks, such as IEEE 802.11 WLANs, and other WPANs. The transmission power of WPAN devices should be scheduled and not exceed the limitation specified in the FCC regulations. On the other hand, as with other portable wireless communication systems, energy consumption is still one of the key issues. Much research effort has been expended in the area of the physical layer (PHY) technology of WPAN communication, such as UWB PHY technology, which is a striking contrast to that in the MAC layer. Generally, in the WPAN MAC, IEEE802.15.3, the PNC (Piconet Controller) has an important role, since it centrally controls all the networking operations. Moreover, the PNC can be altered dynamically, so an efficient PNC selection method can have a significant effect on the performance of a WPAN.

As specified in the standard, the Piconet in IEEE 802.15.3 has the following characteristics:

It is an ad hoc data communication system.

It operates within a small area around a person or object (Diameter < 10m).

The communication devices may be stationary or in motion.

Most of the devices are battery operated.

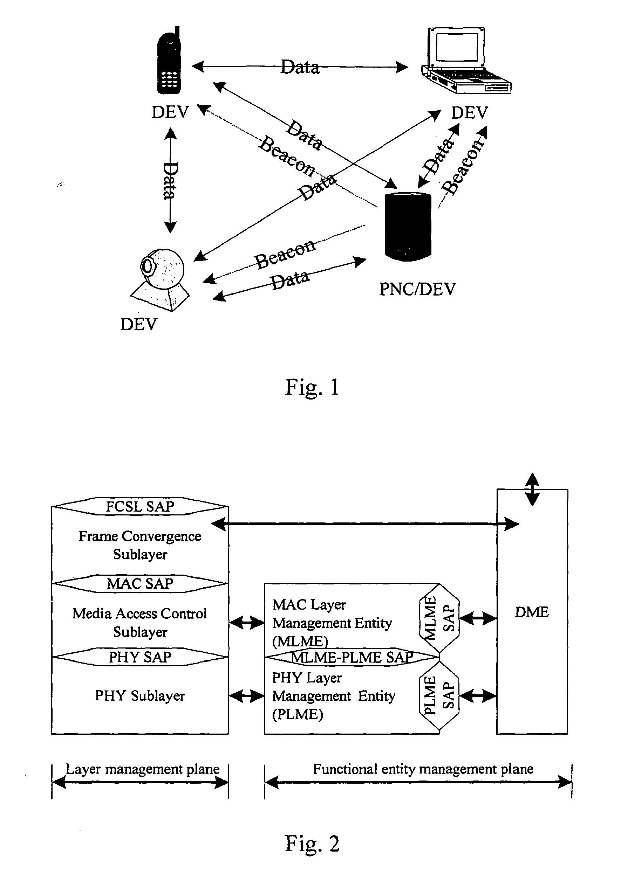

In a Piconet, the PNC is a "master" device, which manages other network members and centrally controls the whole Piconet. Other devices are designated by DEV. The architecture of a Piconet is illustrated in Figure 1.

The PNC uses a beacon frame to manage QoS requirements, power-saving modes, and media access for the entire Piconet. The PNC also classifies various packet transmissions, which are requested by the devices. Different packets have different priority levels for transmission. For instance, some command-data packets have a higher media access priority.

If a PNC finds that other devices are more capable than itself, it hands over the control of its Piconet to a more appropriate devce. This means that the Piconet in IEEE 802.15.3 has a dynamic membership, adapting to the dynamically changing environment and topology. Though the standard specifies the PNC handover mechanism, it does not provide detailed PNC selection policies.

In IEEE 802.15.3, conceptually, the MAC layer management entity (MLME) and the PHY layer management entity (PLME) belong to the MAC layer and the PHY layer respectively. Generally, in IEEE 802.15.3, the function of the device management entity (DME) is to gather the layer-dependent statuses and parameters from the various layer management entities. For example, feature discovery and calculation are the basic functions of the PDE. The relationship of the entities and the layers is shown in Figure 2, in which the service access point (SAP) is an interface dealing with the interaction between two layers or two entities.

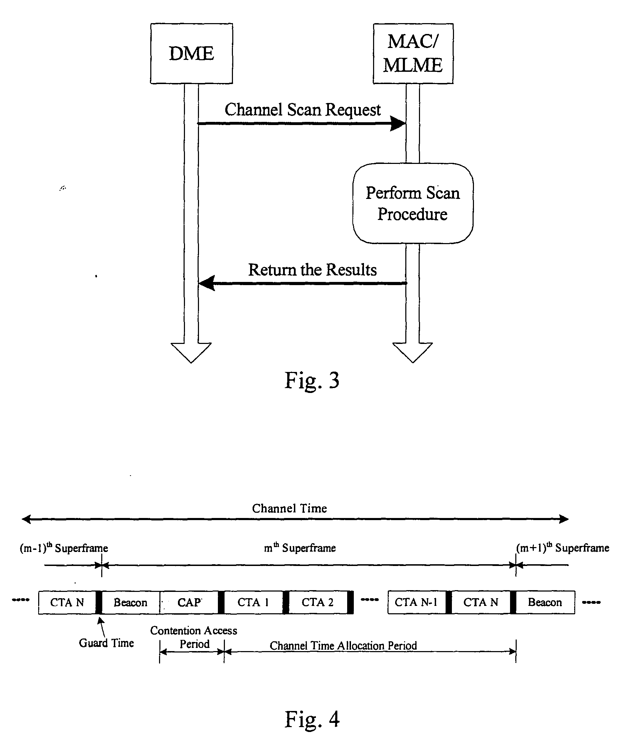

When a new device establishes a Piconet, it scans all the channels and collects the statistics of each channel, thus detecting any active Piconet. Firstly, the DME sends a channel-scan request to the MAC/MLME. Then the device, which is MLME in receiving mode, traverses through all the indexed channels indicated in the request command from the DME. The device listens to each channel for a time to detect a beacon from a PNC. If the device detects no beacon from any PNC in a scanned channel, this is a potential channel with which to start a Piconet. After scanning all the channels, the device returns the results to the DME. Figure 3 shows the scan operation between the DME and the MAC/MLME.

After scanning all the possible channels, the device chooses an appropriate channel to start a Piconet. This channel should have the least amount of interference. Once a PNC has built a Piconet, it will periodically scan the channel to check that it is clear. If there is another Piconet on the same channel, the PNC will change to a different channel or reduce the Piconet's transmission power to improve coexistence with other Piconets.

If the PNC finds that it no longer has the capability to be a PNC, or has to leave the Piconet, it will start a handover procedure to transfer its PNC functionalities to another capable device.

The PNC will shut down the Piconet under following instances, which are specified in the IEEE 802.15.3 standard:

The PNC receives a shut down request from higher layer.

No device is capable of taking over as PNC in the Piconet.

There is insufficient time for the handover operation.

A new device entering the Piconet sends an association request to the PNC. The PNC responds by indicating to this device either that it has been assigned to the Piconet or that it has been rejected. On rejecting the device, the PNC will send the reason for the rejection to the device.

After accepting a new device, the PNC will broadcast the Piconet information to all the devices in the Piconet once again. If a device wants to leave the Piconet, or a PNC wants to remove a device from the Piconet, a disassociation request command with a disassociation reason is required. To indicate their existence, all the devices should send frames to the PNC sufficiently frequently. If the PNC does not receive any information directly from a given device within an association timeout period (ATP), the PNC disassociates that device. When a device does not need to send any traffic to the PNC, it sends a so-called Probe Request command, causing the PNC reset the ATP time counter. This is important in order that the PNC can maintain valid information about the Piconet.

In IEEE 802.11, the media access is based on CSMA/CA (Carrier Sense Multiple Access/Collision Avoidance), in which each station has an equal right to access the channel. In IEEE 802.15.3, the PNC globally controls the channel access for each device in the Piconet. The channel time is divided into superframes. As illustrated in Figure 4, a superframe has three parts: Beacon, Contention Access Period (CAP), and Channel Time Allocation Period (CTAP).

The CAP and the CTAP are optional periods. Allocation information about the CAP and the CTAP is contained in the beacon.

In a CAP, devices access the channel based on CSMA/CA. The CAP is used for commands or non-stream data, which ensures a light traffic load. In order to minimize the risk of collision, a device waits for a random length of time before beginning to transmit. Before transmission, a device checks the time remaining in the CAP. If there is insufficient time for the whole frame exchange, the device suspends the transmission. In IEEE 802.15.3, being outside a CAP or having insufficient time remaining in a CAP also causes the backoff counter to be suspended. When a device cannot receive an acknowledgment after sending a packet, it will retransmit the packet, but no more than three times.

In a CTAP, channel access is based on TDMA. The CTAP is divided into many Channel Time Allocations (CTAs). Each CTA is assigned to an individual device or to a group of devices. The location and duration of each CTA is specified in the beacon. The CTAP is designed for all kinds of data. The device checks the number and priority level of pending frames, and then selects a frame for transmission in the CTA. The device requests the PNC to allocate a CTA for its data exchange. Since the full duration of the CTA can be utilized by a device or a group of devices, successful transmission is guaranteed. The CTA can support bulk data (such as multi-megabyte sized image files), and isochronous data (such as a video stream) very efficiently. The IEEE 802.15.3 standard does not specify how to allocate the CTAs to the devices.

It is an aim of the invention to provide a method of selecting a PNC from among the devices of a WPAN, in which method the critical coexistence and power-saving problems are managed with only a slight modification to the IEEE 802.15.3 standard.

From one aspect, the invention provides a method of selecting one of a plurality of candidate devices forming at least part of a wireless personal area network (WPAN) to be a controller of said WPAN, the method comprising assessing, for each of said candidate devices, the distances between that candidate device and other devices of the WPAN and selecting a centrally-located one of the candidate devices to be the controller, taking said distances into account.

The step of assessing the distances may comprise assessing the distances between the candidate device and every other device in the WPAN. It may comprise estimating the distances by measuring the strength of signals received by the candidate device from other devices. The step of assessing the distances may include finding the variance of the estimated distances, and the step of selecting the controller may comprise selecting a device having the lowest such variance or one of the lowest such variances. Alternatively or additionally, the step of assessing the distances may include finding one of the maximum of the squares of the estimated distances, the maximum of the estimated distances or the sum of the estimated distances. The step of selecting the controller may then comprise selecting the device having the lowest such maximum or sum or one of lowest such maximums or sums.

Repeated selection of the same device as the controller could deplete the battery energy of that device. Thus, in an embodiment of the invention, the step of selecting the controller also comprises taking into account the residual battery energy of candidate devices. For example, the method may include a step of finding the set of candidate devices having at least a predetermined residual battery energy, the selection step being limited to selection from said set. Other QoS criteria of candidate devices, for example transmission rate, memory capacity and CPU (central processing unit) speed may be taken into account, for example by specifying minimum values for said criteria.

From another aspect, the invention provides a communication device for use in a WPAN, the device arranged to estimate the distances between itself and other devices of the WPAN to assist in selection of a controller for the WPAN. The device may be arranged to measure the strength of signals received from said other devices in order to estimate said distances. The device may be arranged to calculate the variance of said estimated distances. The device may be arranged to send a packet of data to which a signal representing its residual battery energy is attached. Signals representing the memory capacity and/or the CPU speed of the device may also be attached to said packet.

From yet another aspect, the invention provides a communication device for use in a WPAN, the device being arranged to select one of a plurality of candidate devices forming at least part of said WPAN to be a controller of said WPAN, by a method comprising assessing, for each of said candidate devices, the distances between that candidate device and other devices of the WPAN and selecting the controller whilst taking said distances into account. In particular, the communication device may be arranged to select a device having the lowest variance, or one of the lowest variances, of said distances. It may alternative be arranged to select a device having the lowest, or one of the lowest of (i) the maximum of the squares of said distances, (ii) the maximum of said distances or (iii) the sum of said distances.

Embodiments of the invention will now be described in more detail, by way of example only, with reference to the accompanying drawings, in which:

Figure 1 shows the architecture of a known Piconet;

Figure 2 shows the relationship between the entities and the layers in a known Piconet;

Figure 3 shows the scanning of channels in a known Piconet;

Figure 4 shows channel time according to IEEE 802.15.3;

Figures 5a and 5b schematically show the transmission distances in a known Piconet and a Piconet employing the method of the present invention respectively;

Figure 6 shows the selection procedure in the method of the present invention;

Figure 7 is a message sequence chart for the method of the present invention;

Figure 8a shows the interference area for a known Piconet;

Figures 8b and 8c show the interference area for Piconets each employing a different method of the present invention;

Figure 9 compares average residual energy in the devices of a known Piconet with that of a Piconet employing the method of the present invention;

Figure 10 shows the energy consumed by the PNC selection process as a percentage of the total; and

Figure 11 compares PNC survival probabilities of two embodiments of the invention with that of a known Piconet.

The following description focuses on a solution in the MAC layer and refers to the PNC selection method of the invention as Least Distance Variance PNC (LDV-PNC) selection or as Least Distance Squared PNC (LDS-PNC) selection.

Both of these methods release the interference pressure of the WPAN and improve the power saving and survivability of the entire network.

Particularly when UWB physical layer technology is applied, there is a possibility of spectrum overlap and the coexistence of a WPAN and other wireless networks. Minimizing the interference to other networks is one of the key problems in a WPAN. To meet the FCC regulations and afford a good quality signal, the transmission power of a device in a WPAN should be well controlled. On the other hand, it is well known that reducing the transmission power is also an important aspect for power saving in battery-operated wireless networks (1. Stojmenovic and X. Lin, "Power-Aware Localized Routing in Wireless Networks", IEEE Transactions on Parallel and Distributed Systems, Vol. 12, Issue 11, Nov. 2001, pp. 1122-1133). The transmission power is strongly linked to the transmission distance. It is clear that reducing the transmission distance can decrease the demanded transmission power. As described by Stojmenovic and Lin *(supra)*, if $P_r(di,j)$ is the desired receiving power level for a correctly decoded packet between devices *i* and *j,* then the relationship between the transmission power $Pt(d_{i,j})$ and the received power can be described by:

$$P_r(d_{i,j}) = P_t(d_{i,j}) \cdot \left( \frac{\lambda}{4\pi d_{i,j}} \right)^n \frac{G_t G_n}{L} \qquad (1)$$

where $d_{i,j}$ is the distance between transmitter i and receiver $j$, $\lambda$ is the wavelength, $G_t$ and $G_r$ are the antenna gains of the transmitter and receiver respectively, $L$ is the system loss factor, n is the path loss exponent with a typical value between 2 and 4.

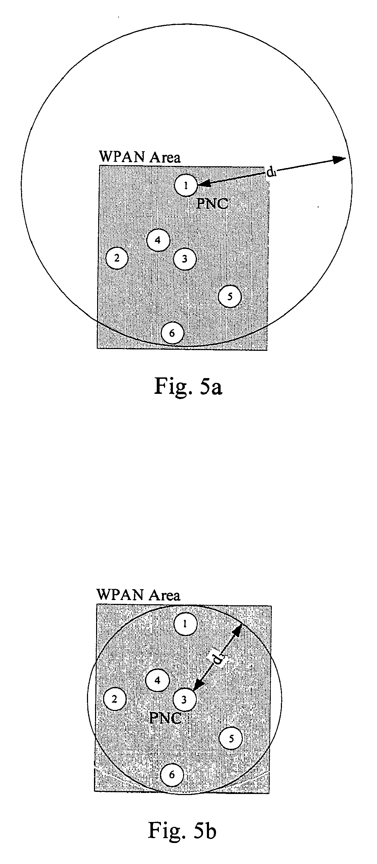

In terms of the IEEE 802.15.3 standard, the most capable device may be dynamically selected as the PNC of a WPAN. Generally, the capability function, Ci, of a source limited device is determined by its transmission rate, memory capacity, CPU speed, residual energy, or other characteristics. No definition of capability has been specified by the standard explicitly. According to the present invention, the distance between the PNC and other devices is considered within the capability function, $C_i$, for the selection method, to reduce interference introduced by PNC communication and save energy. For example, Figure 5a schematically shows an existing WPAN including devices 1 to 6, the rectangle defining the WPAN area. Assume that a particular device 1 is chosen for the PNC. In this case, to cover all the remaining devices 2 to 6, the PNC has to increase transmission power to satisfy the emission radius di. Figure 5b shows the same WPAN but with a PNC selection scheme according to the LDV-PNC method of the invention, which has resulted in the selection of a different device 3 as the PNC. The emission radius $d_3$ for device 3 is significantly smaller than the emission radius $d_1$. Thus, we can see that selecting device 1 as the PNC will result in an extended interference area and more energy consumption, both in the PNC and other remote devices. For example, devices 5 and 6 will need to increase transmission power to successfully exchange information with the PNC 1. Generally, selecting a more central device as the PNC can decrease the interference area and the extra transmission power introduced by the PNC.

However, from the point of view of improving the survivability of the whole WPAN, frequently selecting a PNC with the lowest energy path will result in energy exhaustion in this PNC, thus resulting in network partitioning and topology instability. A similar problem affecting routing in ad-hoc networks is discussed by Rahul C. Shah, and Jan M. Rabaey in "Energy Aware Routing for Low Energy Ad Hoc Sensor Networks," Wireless Communications and Networking Conference, 2002, WCNC2002, IEEE, vol.1, 17-21 March 2002, pp.350 - 355 and by Y. Zhou, D. I. Laurenson, S. McLaughlin in "High Survival Probability Routing in Power-Aware Mobile Ad Hoc Network," IEE Electronics Letters, Vol. 40, No. 22, 28th Oct. 2004, pp.1424-1426.

Details of Selection Techniques

A PNC Selection Counter (PSC) is configured to an initial value, T, when a PNC is selected. The PNC decreases its PSC until it reaches zero. The PNC selection routine is always started by a PNC in the following cases:

the PSC meets zero;

the PNC finds its residual battery energy meets the lower bound, $E_L$; or

the PNC finds it needs to leave the Piconet.

At the beginning of the PNC selection routine, the PNC attaches a PNC selection request (PSR) to the beacon frame and sends this beacon to all the devices at the start of the superframe. When the devices receive the PSR, they will try to send a PSR-ACK packet back to the PNC as an acknowledgement. Each device i attaches the value of its residual battery energy, $Ei$, and other characteristics, such as memory capacity and CPU speed, to the PSR-ACK, and uses the maximum power level, $P_{max}$, to send this packet during the CAP (using the CSMA/CA mechanism). Since the PSR-ACK is a small packet, it can be successfully transmitted by most devices within CAP. For simplicity, if a device cannot successfully transmit a PSR-ACK within the CAP, for instance because of severe access contention, this device will not try to send the PSR-ACK in other CAPs, which means that the device will be ignored for PNC selection.

All devices within the Piconet, including the PNC, listen for this PSR-ACK. Since our algorithm requires only a rough value of the distance between two stations, the received signal strength of the PSR-ACK is measured to estimate the distance. When device i receives a PSR-ACK from device j, it uses equation (1), with $n=2$, to compute the distance between devices i and j, $d_{i,j}$ as:

$$d_{i,j} = \frac{\lambda}{4\pi}\sqrt{\frac{P_{\max}G_i G_r}{P_{r,i}L}} \qquad (2)$$

where $P_{r,i}$ is the received power lever measured by the station i.

A device, *i*, within the Piconet, which has *N*+1 devices, records a set of the distances between other stations and itself, which can be depicted as:

$$D_i = \{ d_{i,j} \}; \qquad j = 0, 1, \dots N\text{-}1, N; \qquad j \neq i \qquad (3)$$

Then device i calculates the variance of Di as the following:

$$V_i = \mathrm{var}(D_i) = \sum_{j=0,1,2,\dots N; j \neq i} \{d_{i,j} - E(D_i)\}^2 / N \qquad (4)$$

where $E(D_i)$ is the mean, which can be estimated by:

$$E(D_i) = \frac{1}{N} \cdot \sum_{j=0,1,2,\dots N; j \neq i} d_{i,j} \qquad (5)$$

Alternatively, the maximum distance square of device *i* among its distance set $D_i$ can be calculated as:

$$MD_i = \max_{j=0,1,2,\dots N; j \neq i} \{d_{i,j}^2\} \qquad (6)$$

Generally, the PNC will consume more energy than a normal device, so it is necessary for a device to have enough battery energy to act as a PNC. Therefore, after receiving all the PSR-ACKs, the PNC tries to find a devce set, R* , in which the devices' residual battery energy is more than $E_L$. R* can be defined as:

$$e(DEV_i) \geq E_L \qquad (\forall DEV_i \in R^*) \qquad (7)$$

where $DEV_i$ is one of the devices in the set *R*\*, and *e(DEV$_i$)* is its residual battery energy. This step can prevent a centrally-located device from being frequently chosen as a PNC without consideration of the residual energy, which will result in network partitioning. In some cases, other QoS criteria, such as memory capacity and CPU speed, may be considered in the PNC selection. The capability function, *C(DEV$_i$)* which is related to these features, can be defined to find another set of devices, R** , as:

$$C(DEV_i) \geq C_L \qquad (\forall DEV_i \in R^* \in R^{**}) \qquad (8)$$

where $C_L$ is the lower bound of the capability.

If $R^* = \varnothing$ or $R^{**} = \varnothing$, a warning message will be sent to the application layer to make the user aware.

At the beginning of the next superframe, the PNC attaches all IDs of the devices in $R^{**}$ and a distance report request (DRR) to the beacon, and broadcasts it to the Piconet. To decrease the energy consumed in transmission, only the devices which are members of $R^{**}$, and are specified in the beacon, can listen to this DDR, and send a DRR-ACK packet to the PNC during the following CAP.

In the case of LDV-PNC, this packet encloses the variance, $V_i$. After receiving all the values of V;, the PNC finds an optimal device to replace it.

Obviously, the optimal device has the minimal variance of the distances, which can be specified by:

$$\operatorname{var}(DEV_{opt}) = \min_{\forall DEV_i \in R^{**}} \operatorname{var}(DEV_i) \; (DEV_{opt} \in R^{**} \in R)^* \qquad (9)$$

If the Least Distance Square PNC selectrion metric is applied, the optimal device, $DEV_{opt}$, can be specified by:

$$MD_{opt} = \min_{\forall DEV_i \in R^{**}} MD_i \quad (DEV_{opt} \in R^{**} \in R^*) \qquad (10)$$

Then the current PNC will start a procedure to hand over the control of this Piconet to the selected optimal device. When the selected optimal device becomes a PNC, it will also restart a PSC for the next PNC selection timer. The new PNC will transmit beacons and other control packets with a required transmission power level calculated using equation (1), given n=2:

$$P_t(d_{i,j}) = P_r^* \cdot (\frac{4\pi d_{max}}{\lambda})^2 \frac{L}{G_t G_r} \qquad (11)$$

where $P^*$ is a required power level of the receiving signal required for correct decoding, and $d_{max}$ is the maximal distance between the new PNC and other devices, which can be found in the distance set D;.

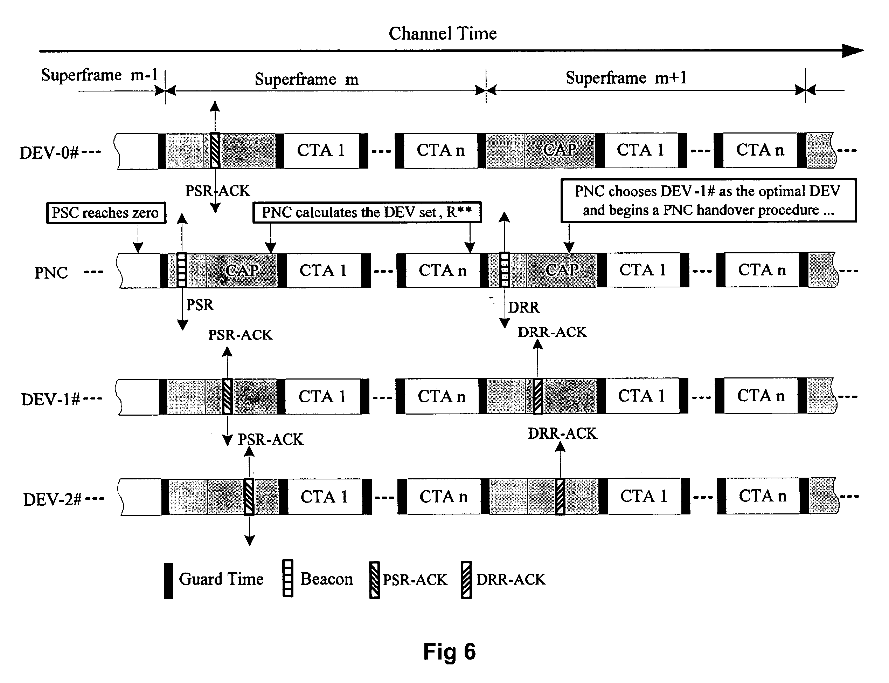

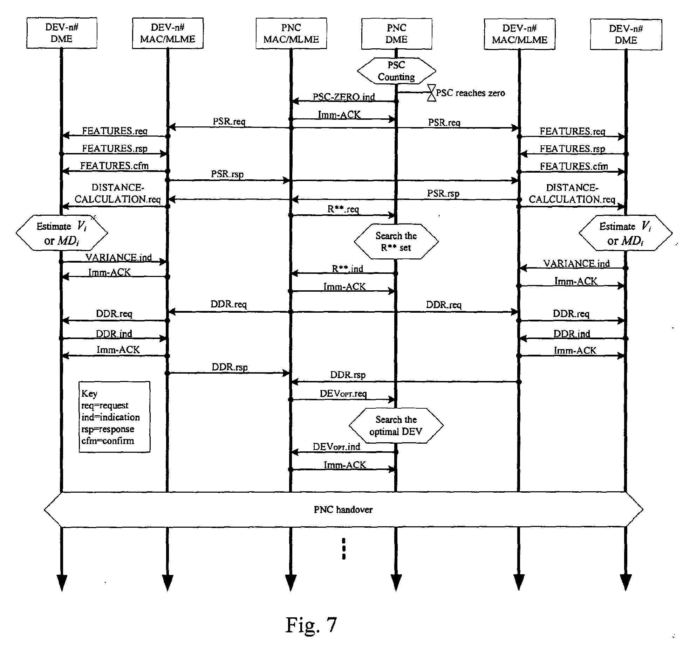

Figure 6 shows an example of the proposed PNC selection procedure. When the PSC reaches zero, the PNC broadcasts a beacon with PSR information attached. During the following CAP, all the devices will enclose the related features in their PSR-ACK packets and send them to the PNC. The remaining duration of the $m^{th}$ superframe is enough for the PNC and devices to calculate the set $R^{**}$, and the distance variance. In the next beacon window, the PNC sends the DDR information to the devices belonging to set $R^{**}$ by beacon transmission. Then the devices (DEV-#1 and DEV-#2) in set $R^{**}$ send the DDR-ACK to the PNC. Finally, the PNC uses the distance variance information attached in DDR-ACK packets to choose the optimal DEV as the next PNC. Figure 7 is the message sequence chart (MSC) of this mechanism.

Simulation

In this section, several examples are provided to show the performance of the proposed PNC selection method. In the simulation, all the devices are randomly located in the same coverage area so that they can communicate directly with each other. A real-time Variable Bit Rate (rt-VBR) MPEG4 traffic generator, introduced in http://vvww.sce.carleton.ca/-amatrawy/mpeg4/, is implemented in the simulation. Table 1 shows some key parameters.

TABLE 1 Simulation Parameters

| Parameters | Value |
|---|---|
| Superframe size | 10ms |
| Mean offered load by rt-VBR | 8Mbps |
| Simulation area | 10m x 10m |

(continued)

| Parameters | Value |
|---|---|
| Total number of devices (including PNC) | 5,10,15,20,25,30 |
| PNC selection period | 150ms |
| Channel Bit Rate | 100Mbit/s |
| Packet deadline | 33ms |
| Lower limitation of the residual energy in devices $E_L$ | 500 J |

The energy consumption is estimated by the "first order radio" model discussed in [7]. This energy model can be described as follows:

$$E_{i\_tx} = E_{tx} \times S_{tx} + \varepsilon_{amp} \times S_{tx} \times d_{i\text{-}j}^2$$

$$E_{i\_rx} = E_{rx} \times S_{rx} \qquad \text{(Joules)} \qquad (12)$$

where $E_{i\_tx}$ is the energy consumed in transmission, and $E_{i\_rx}$ the energy consumed in reception for node i. $E_{tx}$ and $E_{rx}$ are the radio transmitter and receiver operation energy dissipation per bit. We assume the sensor node has some form of power control to achieve an acceptable signal-to-noise ratio. $\varepsilon_{amp}$ is set to obtain the desired signal strength for transmissions to $j$. $S_{tx}$ and $S_{rx}$ are the transmitted packet size and the received packet size. $d_{i\text{-}j}$ is the distance between the source node $i$ and the destination node $j$. In the simulation, $E_{tx} = E_{rx}$ 50nJ/bit; $\varepsilon_{amp}$ = 100nJ/bit/m$^2$. Each node is given an initial energy, calculated from a uniform PDF with the range [1800J, 2000J].

For validation of the PNC selection methods, it is assumed that each device has the same memory capability, CPU speed, and receiving/ transmitting characteristics, which means $R^* = R^{**}$.

**Interference area introduced by PNC communication**

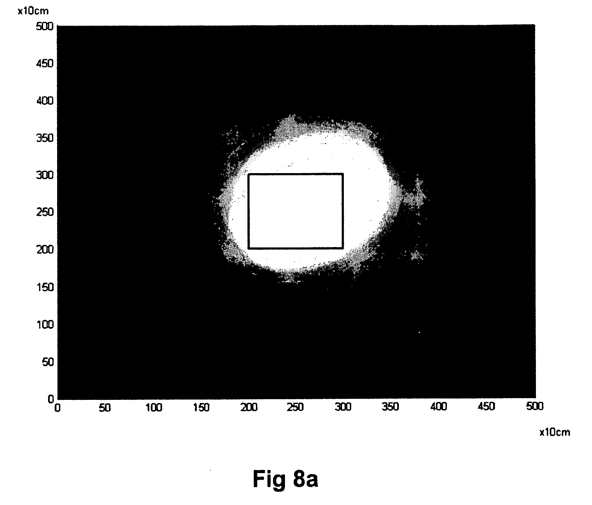

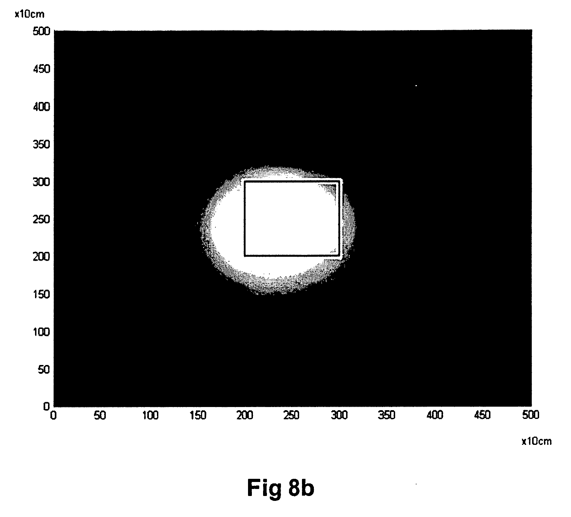

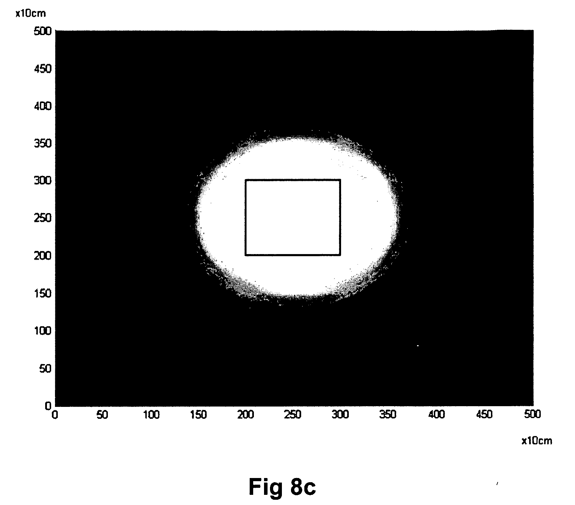

The proposed method considers the transmission distance in PNC selection. Normally, a device which has a smaller distance metric, and is selected as the PNC, will be located in the central area of the whole network. On the other hand, the proposed method utilizes an estimated distance to control the transmission power level of the PNC, thus the area occupied by the PNC communication radiation and the battery energy consumed in the PNC can be diminished. Figure 8a shows the coverage of PNC communication in the normal IEEE 802.15.3-based WPAN. Figure 8b shows coverage in the LDV method and Figure 8c shows coverage in the LDS method. In the simulations, 10 devices (1 PNC, 9 other devices) are randomly located in a 10m x 10m area, which is indicated by the black frame. The central dark area means this area has been covered by the PNC's transmission for a high percentage of time. It is clear that using the LDV-PNC selection method can decrease the coverage area of the PNC radiation, which causes less interference to the neighboring networks and saves energy for the PNC.

**Average Residual Energy in Each Device**

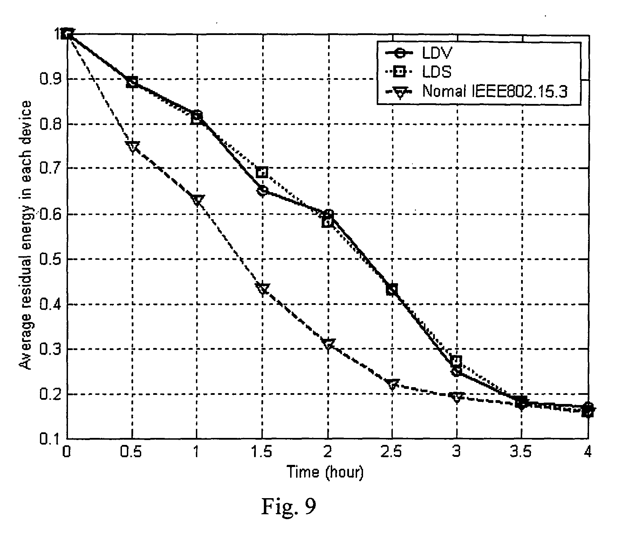

To measure the power-saving features of the LDV-PNC selection algorithm, the average battery energy of the 10 devices, including 1 PNC and 9 others, is measured in a 4-hour simulation. The measured values are normalized to the initial battery energy in each device. Figure 9 compares the results of the LDV-PNC and LDS-PNC selection methods to the normal IEEE802.15.3 mechanism. Because the demand for transmission power is decreased by avoiding long transmission paths, more energy is saved in the inventive methods than the normal IEEE 802.15.3 mechanism. For example, the devices with LDV-PNC and LDS-PNC selection survive, on average, 1 hour longer than the devices in the normal IEEE 802.15.3 WPAN when 50% of the initial battery energy is used. There is little difference in performance between the LDS-PNC and LDV-PNC selection methods.

**Percentage of Energy Consumption for LDV-PNC Selection**

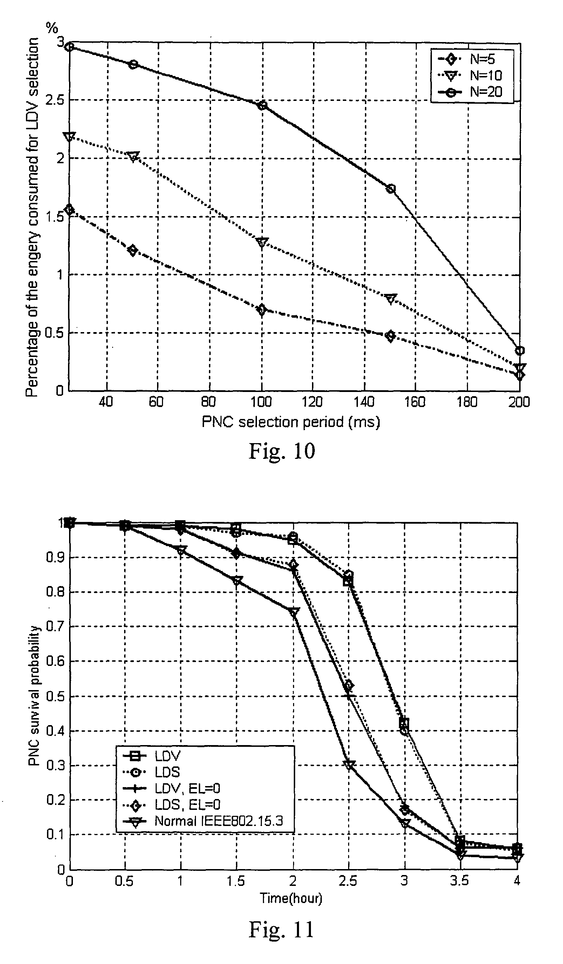

It might be thought that a drawback of the selection methods of the invention is more packet exchanges, involving PSR, PSR-ACK, DRR and DRR-ACK packets. The energy used for receiving and transmitting these packets is the majority of energy consumption for the present PNC selection mechanism. Depicted in Figure 10, the percentage of the energy consumption for LDV-PNC selection mechanism is strongly linked to the PNC selection period and the number of devices, N. A short PNC selection period can help the algorithm accurately obtain the change of the devices status, but this will result in frequent transmission of the control packets for LDS- and LDV-PNC selection. In real systems, this tradeoff should be considered carefully. However, because we utilize the existing beacon frames and the control packets in the present selection methods, which are very small, the energy used is very small. For instance, when the PNC selection period is 150 ms, the average energy consumed for the LDV-PNC selection is less than 1.75% of the total energy consumption.

**PNC Survival Probability**

When $E_L$ is configured to zero, which means the selection method does not consider the residual energy in the selection policies, the central devices will have a high probability of being selected as the PNC. However, frequently selecting devices with a small distance variance or small maximum square distance may lead to energy exhaustion of these devices, thus resulting in network partitioning and topology instability. Figure 11 compares the PNC survival probability of the present LDV-PNC selection, LDV-PNC without the lower limitation of residual energy, and the normal IEEE 802.15.3 WPAN. It is clear that the proposed LDV-PNC method can prolong the lifetime of PNCs in WPANs.

Conclusion

The methods of the invention offer both power saving and an effective decrease in the interference produced by PNC communication.
All forms of the verb "to comprise" used in this specification should be understood as forms of the verbs "to consist of" and/or "to include".

**Claims**

**1.** A method of selecting one of a plurality of candidate devices forming at least part of a wireless personal area network (WPAN) to be a controller of said WPAN, the method comprising assessing, for each of said candidate devices, the distances between that candidate device and other devices of the WPAN and selecting a centrally-located one of the candidate devices to be the controller, taking said distances into account.

**2.** A method according to claim 1, wherein the step of assessing the distances comprises assessing the distances between the candidate device and every other device in the WPAN.

**3.** A method according to claim 1 or 2, wherein the step of assessing the distances comprises estimating the distances by measuring the strength of signals received by the candidate device from other devices.

**4.** A method according to claim 1, 2 or 3, wherein the step of assessing the distances includes finding the variance of the estimated distances, the step of selecting the controller comprising selecting a device having the lowest such variance or one of the lowest such variances.

**5.** A method according to any preceding claim, wherein the step of assessing the distances includes finding one of the maximum of the squares of the estimated distances, the maximum of the estimated distances or the sum of the estimated distances, the step of selecting the controller comprising selecting the device having the lowest such maximum or sum or one of lowest such maximums or sums.

**6.** A method according to any preceding claim, wherein the step of selecting the controller also comprises taking into account the residual battery energy of candidate devices.

**7.** A method according to claim 6, including a step of finding the set of candidate devices having at least a predetermined residual battery energy, the selection step being limited to selection from said set.

8. A method according to any preceding claim, wherein other quality of service criteria of candidate devices, are taken into account for the selection of the controller, for example by specifying minimum values for said criteria.

9. A method according to claim 8, wherein said other quality of service criteria include at least one of transmission rate, memory capacity and CPU (central processing unit) speed.

10. A communication device for use in a WPAN, the device arranged to estimate the distances between itself and other devices of the WPAN to assist in selection of a controller for the WPAN.

11. A device according to claim 10, arranged to measure the strength of signals received from said other devices in order to estimate said distances.

12. A device according to claim 10 or 11, arranged to calculate the variance of said estimated distances.

13. A device according to claim 10, 11 or 12, arranged to send a packet of data to which a signal representing its residual battery energy is attached.

14. A device according to claim 13, wherein a signal representing the memory capacity is also attached to said packet.

15. A device according to claim 13 or 14, wherein a signal representing the CPU speed of the device is also attached to said packet.

16. A communication device for use in a WPAN, the device being arranged to select one of a plurality of candidate devices forming at least part of said WPAN to be a controller of said WPAN, by assessing, for each of said candidate devices, the distances between that candidate device and other devices of the WPAN and selecting the controller whilst taking said distances into account.

17. A device according to claim 16, arranged to select a device having the lowest variance, or one of the lowest variances, of said distances.

18. A device according to claim 16, arranged to select a device having the lowest, or one of the lowest of (i) the maximum of the squares of said distances, (ii) the maximum of said distances or (iii) the sum of said distances.

Fig. 1

Fig. 2

Fig. 3

Fig. 4

WPAN Area

PNC

$d_1$

## Fig. 5a

WPAN Area

PNC

$d_2$

## Fig. 5b

Channel Time

Superframe m-1 | Superframe m | Superframe m+1 |

DEV-0# --- [ | Beacon | PSR-ACK | CAP | CTA 1 ] --- [ CTA n | CAP | CTA 1 ] --- [ CTA n | ] ---

PSR-ACK

PSC reaches zero

PNC calculates the DEV set, R**

PNC chooses DEV-1# as the optimal DEV
and begins a PNC handover procedure ...

PNC --- [ | Beacon | CAP | CTA 1 ] --- [ CTA n | Beacon | CAP | CTA 1 ] --- [ CTA n | ] ---

PSR

DRR

PSR-ACK

DRR-ACK

DEV-1# --- [ | CAP | PSR-ACK | CTA 1 ] --- [ CTA n | DRR-ACK | CTA 1 ] --- [ CTA n | ] ---

PSR-ACK

DRR-ACK

DEV-2# --- [ | PSR-ACK | CTA 1 ] --- [ CTA n | DRR-ACK | CTA 1 ] --- [ CTA n | ] ---

PSR-ACK

Guard Time    Beacon    PSR-ACK    DRR-ACK

Fig 6

Fig. 7

Fig 8a

EP 1 708 440 A1

**Fig 8b**

17

**Fig 8c**

Fig. 9

Fig. 10

Fig. 11

**European Patent Office**

**EUROPEAN SEARCH REPORT**

Application Number

EP 06 25 1766

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 324 540 A (KABUSHIKI KAISHA TOSHIBA) 2 July 2003 (2003-07-02) | 1-8, 10-14, 16-18 | INV. H04L12/56 |
| Y | * abstract * * paragraphs [0002], [0007] - [0016], [0022] - [0032], [0036] - [0050], [0058], [0118], [0122] - [0127], [0213], [0225] - [0227] * * paragraphs [0244] - [0246] * | 9,15 | |
| X | SINGH S ET AL: "Electing leaders based upon performance: the delay model" INTERNATIONAL CONFERENCE ON DISTRIBUTED COMPUTING SYSTEMS. ARLINGTON, TEXAS, MAY 20 - 24, 1991, PROCEEDINGS OF THE INTERNATIONAL CONFERENCE ON DISTRIBUTED COMPUTING SYSTEMS, LOS ALAMITOS, IEEE COMP. SOC. PRESS, US, vol. CONF. 11, 20 May 1991 (1991-05-20), pages 464-471, XP010023086 ISBN: 0-8186-2144-3 * pages 464-466, paragraphs 1,2 * | 1,2,4,5, 10,12, 16-18 | |
| Y | WO 2004/032424 A (SONY CORPORATION; SONY INTERNATIONAL GMBH; LOEEBBERT, JOHANNES; SASAI) 15 April 2004 (2004-04-15) | 9,15 | TECHNICAL FIELDS SEARCHED (IPC) H04L |
| A | & US 2005/086273 A1 (LOEBBERT JOHANNES ET AL) 21 April 2005 (2005-04-21) * paragraphs [0017] - [0022] * | 1-8, 10-14, 16-18 | |
| A | EP 1 176 762 A (SAMSUNG ELECTRONICS CO., LTD) 30 January 2002 (2002-01-30) * abstract * * paragraphs [0011] - [0017] * | 1-18 | |

The present search report has been drawn up for all claims

| Place of search | Date of completion of the search | Examiner |
|---|---|---|
| Munich | 29 June 2006 | Isopescu, C |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 06 25 1766

This annex lists the patent family members relating to the patent documents cited in the above-mentioned European search report.
The members are as contained in the European Patent Office EDP file on
The European Patent Office is in no way liable for these particulars which are merely given for the purpose of information.

29-06-2006

| Patent document cited in search report | | | Publication date | Patent family member(s) | | Publication date |
|---|---|---|---|---|---|---|
| EP 1324540 | A | | 02-07-2003 | CN 1430341 A | | 16-07-2003 |
| | | | | US 2003124979 A1 | | 03-07-2003 |
| WO 2004032424 | A | | 15-04-2004 | AU 2003266629 A1 | | 23-04-2004 |
| | | | | CN 1602606 A | | 30-03-2005 |
| | | | | EP 1548985 A1 | | 29-06-2005 |
| | | | | JP 2004129042 A | | 22-04-2004 |
| | | | | US 2005086273 A1 | | 21-04-2005 |
| US 2005086273 | A1 | | 21-04-2005 | AU 2003266629 A1 | | 23-04-2004 |
| | | | | CN 1602606 A | | 30-03-2005 |
| | | | | EP 1548985 A1 | | 29-06-2005 |
| | | | | WO 2004032424 A1 | | 15-04-2004 |
| | | | | JP 2004129042 A | | 22-04-2004 |
| EP 1176762 | A | | 30-01-2002 | CN 1335698 A | | 13-02-2002 |
| | | | | DE 60100379 D1 | | 24-07-2003 |
| | | | | DE 60100379 T2 | | 13-05-2004 |
| | | | | JP 3421017 B2 | | 30-06-2003 |
| | | | | JP 2002111689 A | | 12-04-2002 |
| | | | | KR 2002009283 A | | 01-02-2002 |
| | | | | TW 519808 B | | 01-02-2003 |
| | | | | US 2002055978 A1 | | 09-05-2002 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MOE Z1. WIN ; ROBERT A. SCHOLTZ.** Impulse Radio: How It Works. *IEEE Communications Letters,* February 1998, vol. 2 (2
- **1. STOJMENOVIC ; X. LIN.** Power-Aware Localized Routing in Wireless Networks. *IEEE Transactions on Parallel and Distributed Systems,* November 2001, vol. 12 (11), 1122-1133

- **RAHUL C. SHAH ; JAN M. RABAEY.** Energy Aware Routing for Low Energy Ad Hoc Sensor Networks. *Wireless Communications and Networking Conference, 2002, WCNC2002, IEEE,* 17 March 2002, vol. 1, 350-355
- **Y. ZHOU ; D. I. LAURENSON ; S. MCLAUGHLIN.** High Survival Probability Routing in Power-Aware Mobile Ad Hoc Network. *IEE Electronics Letters,* 28 October 2004, vol. 40, 1424-1426